# FASCICULE DE BREVET EUROPEEN

(11) **EP 0 887 986 B1**
(45) Date de publication et mention de la délivrance du brevet: **24.10.2007**
(21) Numéro de dépôt: 98202025.7
(22) Date de dépôt: 17.06.1998
(51) Int. Cl.: H04M 1/72

(54) **Dispositif et procédé pour un changement de langue de libellés des menus d'un ou plusieurs appareils téléphoniques**
Vorrichtung und Verfahren zum Ändern der Menüsprache eines oder mehrerer Telefonapparate
Apparatus and method for changing the menu language of one or more telephones

(30) Priorité: 24.06.1997 FR 9707860
(43) Date de publication de la demande: 30.12.1998
(73) Titulaire: Koninklijke Philips Electronics N.V., 5621 BA Eindhoven (NL)
(72) Inventeur: Lorieau, Christophe, 75008 Paris (FR)
(74) Mandataire: van Oudheusden-Perset, Laure E.

(56) Documents cités:
- DE-C- 4 237 395
- US-A- 5 249 217
- US-A- 5 297 203

## Description

L'invention concerne un appareil téléphonique comportant un ensemble d'éléments comprenant :
- une station de base formée, entre autres, par :
   * un ensemble à processeur,
   * une mémoire contenant un programme d'exécution et
   * une mémoire vive,
- un ensemble de dispositifs de combiné chacun formé entre autres par :
   * un écran de visualisation sur lequel peuvent apparaître des libellés de menus,
   * un ensemble à processeur,
   * des moyens de commande pour modifier au moins un service à l'intérieur d'un desdits éléments,
- des moyens de transmission de messages entre la station de base et les dispositifs de combinés.

L'invention concerne un dispositif de combiné et une station de base convenant à un tel appareil.

L'invention concerne aussi un procédé mis en oeuvre dans un tel appareil et concerne également un dispositif de combiné et une station de base convenant à un tel appareil.

L'invention trouve des applications importantes dans les systèmes de télécommunication impliquant des protocoles, c'est notamment le cas des appareils téléphoniques répondant à la norme DECT, par exemple.

Selon cette norme, il est possible à partir d'un dispositif de combiné de faire exécuter des ordres à la station de base. Selon les techniques connues, on parle de mode de transparence pour programmer différents services à effectuer à partir de la station de base.

Du fait que l'on opère au moyen de commandes qui sont frappées sur le clavier des dispositifs de combiné et qui sont ensuite transmises au moyen de liaisons radios susceptibles de s'évanouir, on n'est alors pas certain que l'opération demandée s'est exécutée convenablement.

La présente invention propose un appareil du genre décrit dans le préambule qui assure une meilleure commande de la station de base à partir des dispositifs de combinés.

Pour cela un tel appareil est remarquable en ce qu'il comporte en outre :
- des moyens de réception pour recevoir d'un des dispositifs de combiné un ordre de changement de langue de libellés des menus,
- des moyens de transmission pour transmettre ledit ordre de changement de langue des libellés de menus vers tous les dispositifs de combiné en vue d'être exécuté par lesdits dispositifs.

L'idée de l'invention consiste à préétablir les tâches à effectuer au niveau de la station de base de sorte que, sur une seule information d'ordre d'exécution reçue, celle-ci l'exécute.

Il est à noter que dans les documents de brevet DE 4237395 et US 5249217 on décrit des appareils téléphoniques de ce genre, mais il n'est pas fait mention d'utiliser des moyens de communication entre station de base et dispositifs de combiné pour effectuer des changements de langues des items de menus qui peuvent apparaître sur les différents écrans.

La description suivante faite en regard des dessins ci-annexés, le tout donné à titre d'exemple non limitatif, fera bien comprendre comment l'invention peut être réalisée.

La figure 1 montre un appareil conforme à l'invention.

La figure 2 montre un diagramme explicitant le fonctionnement de l'appareil pour modifier un service au niveau de la station de base

La figure 3 montre un diagramme explicitant le fonctionnement de l'appareil pour modifier un service au niveau de la station de base et au niveau d'au moins un dispositif de combiné.

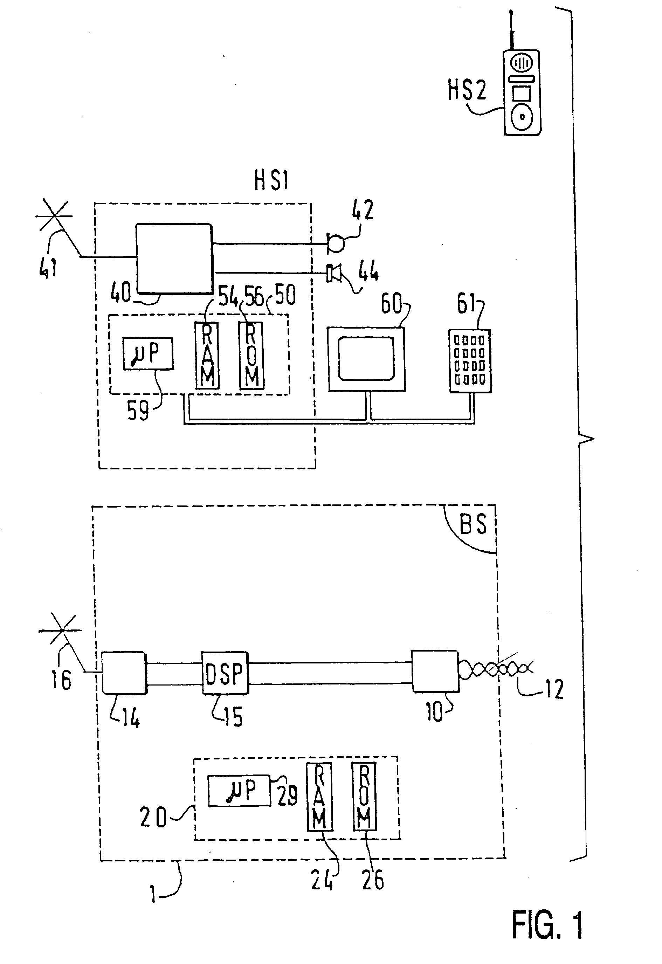

A la figure 1, l'appareil qui est représenté est un appareil répondant aux normes DECT. La référence 1 montre la station de base BS à laquelle peut être rattachée, par voie radioélectrique, une pluralité de dispositifs de combinés HS1, HS2, ... Cette station de base 1 comporte, entre autres, un circuit de ligne 10 qui lui permet d'être raccordée au réseau commuté via une ligne téléphonique 12 et un circuit radioélectrique 14 qui autorise le dialogue avec les différents combinés HS1, HS2,..., en émettant et en recevant des ondes par l'intermédiaire d'une antenne 16. Pour traiter toutes les informations de nature analogique qui transitent à l'intérieur du circuit de base, il est prévu un organe de traitement de signal 15 formé autour d'un processeur de signal DSP qui traite notamment les signaux vocaux pour les transformer en signaux numériques.

Tous les éléments de ce circuit de base 1 sont gérés par un ensemble à microprocesseur 20. Cet organe est composé, notamment, de la façon usuelle, d'une mémoire vive 24, d'une mémoire morte 26 contenant les instructions de fonctionnement de l'appareil et d'un processeur de gestion 29.

Le dispositif de combiné HS1, seul montré en détail (le dispositif HS2 pouvant être de structure identique) comporte un ensemble de communication 40 muni d'une antenne 41 qui lui permet de communiquer avec la station de base BS et de là, avec les autres dispositifs de combinés HS2,.... Cet ensemble traite les informations en provenance du microphone 42 et fournit aussi les signaux pour un haut-parleur 44. Il est prévu aussi un organe de gestion 50 composé, tout comme l'organe de gestion 20, d'une mémoire vive 54, d'une mémoire morte 56 contenant les instructions de fonctionnement de l'appareil et d'un processeur de gestion 59. Le dispositif HS1 comporte aussi un écran 60 sur lequel différentes informations sont affichées et un clavier 61. Ces combinés sont des mobiles et de ce fait sont alimentés par un accumulateur, non représenté sur la figure 1. Sur l'écran 60 peuvent apparaître des menus dont l'utilisateur déclenche l'apparition au moyen des touches du clavier 61. L'utilisateur peut aussi, en agissant sur une touche, valider un item de ce menu.

Une application importante pour laquelle l'invention trouve toute son utilité est le changement de langues des libellés des menus. Ces menus peuvent être issus tant des dispositifs de combinés que de la station de base.

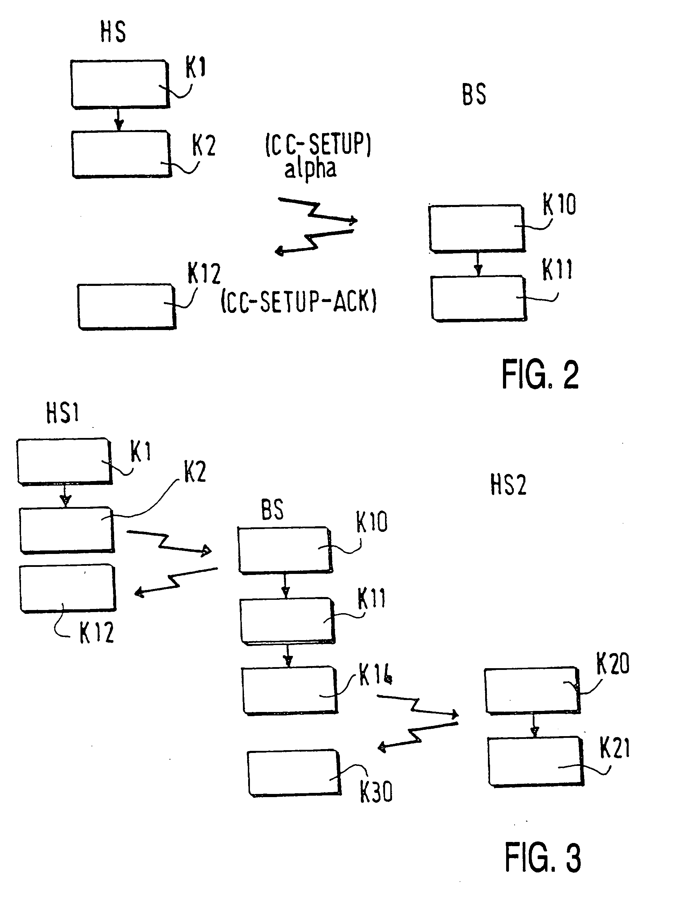

Selon l'invention, l'utilisateur, sur son dispositif de combiné, active le menu concernant cette opération représentée à la case K1 de la figure 2. L'opération suivante va consister à implémenter ce changement de langue sur la station de base BS. Pour cela on va établir un lien en lançant la procédure {CC-SETUP} telle que décrite dans la norme DECT ETS 300 175-5 au paragraphe 9.3 (case K2). A cette procédure on adjoint une information "alpha" qui indique le travail à effectuer par la base BS.

La station de base recevant ce {CC-SETUP} examine le message (case K10) et renvoie une information d'accusé de réception {CC-SETUP-ACK}. Puis la base change le langage en correspondance avec l'information "alpha" (case K11).

Le dispositif de combiné teste l'arrivée de {CC-SETUP-ACK}. S'il y n'a pas eu d'arrivée de cette information, l'utilisateur sait que son changement de langue a probablement été effectué de façon imparfaite. Si l'accusé de réception est bien reçu, alors il est effectué enfin le changement de langue sur le dispositif combiné (case K12). Ainsi grâce à l'invention, il est alors pratiquement sûr que la tâche a bien été effectuée.

Le processus qui vient d'être décrit peut se généraliser aux changements de langues des autres dispositifs de combinés rattachés à cette même station de base BS. Comme cela est montré sur la figure 3, les opérations indiquées sur cette figure sont les mêmes que celles montrées à la figure 2 et portent les mêmes références. La station de base établit un lien vers un autre dispositif de combiné HS2 (case K14). Ce dernier dispositif renvoie un accusé de réception (case K20) et entreprend la tâche qui lui est demandée par le lien (case K21). La station de base analyse (case K30), l'accusé de réception. Si celui-ci indique que tout est normal, on peut alors contacter un autre dispositif de combiné. Sinon on essaiera de contacter plus tard ce mobile et on pourra donc contacter le prochain dispositif de combiné.

## Revendications

1. Appareil téléphonique comportant un ensemble d'éléments comprenant :
- une station de base (1) formée, entre autres, par :
- un ensemble à processeur (20),
- une mémoire contenant un programme d'exécution (26) et
- une mémoire vive (24),
- un ensemble de dispositifs de combiné (HS1, HS2, ...) chacun formé entre autres par :
- un écran de visualisation (60) sur lequel peuvent apparaître des libellés de menus,
- un ensemble à processeur (59),
- des moyens de commande pour modifier au moins un service à l'intérieur d'un desdits éléments,
- des moyens de transmission de messages entre la station de base et les dispositifs de combiné,
**caractérisé en ce que** la station de base comporte en outre :
- des moyens de réception pour recevoir d'un des dispositifs de combiné un ordre de changement de langue de libellés des menus,
- des moyens de transmission pour transmettre ledit ordre de changement de langue des libellés de menus vers tous les dispositifs de combiné en vue d'être exécuté par lesdits dispositifs.

2. Appareil téléphonique selon la revendication 1 **caractérisé en ce que** lesdits éléments comprennent des moyens pour fournir une information d'accusé de réception à la réception dudit ordre de changement de langue des libellés de menus.

3. Appareil téléphonique selon la revendication 1 ou 2 **caractérisé en ce qu'**il satisfait à la norme DECT.

4. Procédé pour modifier un service d'un appareil téléphonique comprenant une station de base et un ensemble de dispositifs de combiné, **caractérisé en ce que** l'on établit un lien entre les dispositifs de combiné et la station de base, **en ce qu'**un dispositif de combiné transmet un ordre de changement de langue des libellés de menus à la station de base, et **en ce que** la station de base transmet ledit ordre à tous les dispositifs de combiné en vue d'être exécuté par ceux-ci.

5. Procédé selon la revendication 4, **caractérisé en ce que** la station de base et/ou les dispositifs de combiné envoient un accusé de réception de l'ordre reçu.

## Claims

1. A telephony device comprising a set of elements formed by:
- a base station (1) formed by inter alia:
* a processor assembly (20),
* a memory containing an execution program (26), and
* a random access memory (24),
- a plurality of handsets (HS1, HS2, ...), each formed by inter alia:
* a display screen (60) on which menu texts can appear,
* a processor assembly (59),
* control means for modifying at least one service inside one of said elements,
- message transmission means for transmitting messages between the base station and the handsets
**characterized in that** the base station further comprises:
- reception means for receiving from one of the handsets an order to change the language of the menu texts, and
- transmission means for transmitting said order to change the language of the menu texts to all handsets so that it can be executed by said handsets.

2. A telephony device as claimed in claim 1, **characterized in that** said elements comprise means for producing an acknowledgement of receipt information signal when said order to change the language of the menu texts is received.

3. A telephony device as claimed in claim 1 or 2, **characterized in that** it complies with the DECT standard.

4. A method of changing a service of a telephony device comprising a base station and a plurality of handsets, **characterized in that** a link is established between the handsets and the base station, **in that** a handset transmits an order to change the language of the menu texts, and **in that** the base station transmits said order to all handsets so that it can be executed by these handsets.

5. A method as claimed in claim 4, **characterized in that** the base station and/or the handsets send an acknowledgement of receipt of the received order.

## Patentansprüche

1. Telefonapparat mit einer Einheit von Elementen, die enthalten:
- eine Basisstation (1), u.a. gebildet aus:
- einer Prozessoreinheit (20),
- einem Speicher mit einem Ausführungsprogramm (26), und
- einem Schreib-Lese-Speicher (24),
- eine Einheit von Handset-Vorrichtungen (HS1, HS2, ...), jeweils u.a. gebildet aus:
- einem Anzeigedisplay (60), auf dem Menüsprache angezeigt werden kann,
- einer Prozessoreinheit (59),
- Bedienungsmitteln zum Ändern mindestens eines Dienstes im Innern eines der besagten Elemente,
- Mittel zum Senden von Nachrichten zwischen der Basisstation und den Handset-Vorrichtungen,
**dadurch gekennzeichnet, dass** die Basisstation außerdem enthält:
- Empfangsmittel für den Erhalt von einer der Handset-Vorrichtungen eines Befehls zum Ändern der Menüsprache,
- Sendemittel für die Übertragung des besagten Befehls zum Ändern der Menüsprache an alle Handset-Vorrichtungen, um von diesen besagten Vorrichtungen ausgeführt zu werden.

2. Telefonapparat nach Anspruch 1, **dadurch gekennzeichnet, dass** die besagten Elemente Mitteln enthalten, um bei Erhalt des besagten Befehls zum Ändern der Menüsprache eine Information der Empfangsbestätigung zu übermitteln.

3. Telefonapparat nach Anspruch 1 oder 2, **dadurch gekennzeichnet, dass** er der DECT-Norm entspricht.

4. Verfahren zum Ändern eines Dienstes eines Telefonapparats, das eine Basisstation und eine Einheit von Handset-Vorrichtungen enthält, **dadurch gekennzeichnet, dass** man eine Verbindung zwischen den Handset-Vorrichtungen und der Basisstation herstellt, ein Handset einen Befehl zum Ändern der Menüsprache der Basisstation überträgt und die Basisstation den besagten Befehls an jede Handset-Vorrichtung überträgt, um von diesen übernommen zu werden.

5. Verfahren nach Anspruch 4, **dadurch gekennzeichnet, dass** die Basisstation und/oder die Handset-Vorrichtungen eine Empfangsbestätigung des erhaltenen Befehls übersenden.
